# FASCICULE DE BREVET EUROPEEN

(11) **EP 3 697 606 B1**
(45) Date de publication et mention de la délivrance du brevet: **18.08.2021**
(21) Numéro de dépôt: 18800701.7
(22) Date de dépôt: 18.10.2018
(51) Int. Cl.: B29D 30/46, B60C 7/12, B60C 7/14

(54) **PROCÉDÉ DE FABRICATION D'UN SOUS-ASSEMBLAGE POUR UN PNEUMATIQUE COMPRENANT UN TISSU OU UN TRICOT TRIDIMENSIONNEL ET UTILISANT UN ÉLÉMENT DE SOLIDARISATION**
VERFAHREN ZUR HERSTELLUNG EINER UNTERBAUGRUPPE FÜR EINEN REIFEN MIT EINEM DREIDIMENSIONALEN GEWEBE ODER GEWIRK UND VERWENDUNG EINES SICHERUNGSELEMENTS
METHOD FOR MANUFACTURING A SUB-ASSEMBLY FOR A TYRE COMPRISING A THREE-DIMENSIONAL FABRIC OR KNITTED MATERIAL AND USING A SECURING ELEMENT

(30) Priorité: 18.10.2017 FR 1759761
(43) Date de publication de la demande: 26.08.2020
(73) Titulaire: Compagnie Générale des Etablissements Michelin, 63000 Clermont-Ferrand (FR)
(72) Inventeur: CORNILLE, Richard, 63040 Clermont Ferrand Cedex 9 (FR); LIMOZIN, Bastien, 63040 Clermont Ferrand Cedex 9 (FR); RIGO, Sébastien, 63040 Clermont Ferrand Cedex 9 (FR)
(74) Mandataire: Louret, Sylvain
(86) Numéro de dépôt international: PCT/FR2018/052604
(87) Numéro de publication internationale: WO 2019/077282

(56) Documents cités:
- WO-A1-2017/103490
- WO-A1-2017/103491
- ADIL MOUNTASIR ET AL: "Development of multilayered woven panels with integrated stiffeners in the transverse and longitudinal directions for thermoplastic lightweight applications", TEXTILE RESEARCH JOURNAL, vol. 83, no. 14, 28 septembre 2013 (2013-09-28), pages 1532-1540, XP055483462, GB ISSN: 0040-5175, DOI: 10.1177/0040517512474367

## Description

### DOMAINE DE L'INVENTION

L'invention concerne de manière générale le domaine des pneumatiques pour un véhicule, typiquement un véhicule de tourisme, à deux roues, poids lourd, agricole, de génie civil ou un avion ou, plus généralement, pour tout dispositif roulant. Plus précisément, l'invention concerne la mise à plat d'un tel pneumatique.

### ARRIERE-PLAN TECHNOLOGIQUE

Un pneumatique 4 est une structure torique destinée à être montée sur une jante, pressurisée par un gaz de gonflage et écrasée sur un sol sous l'action d'une charge.

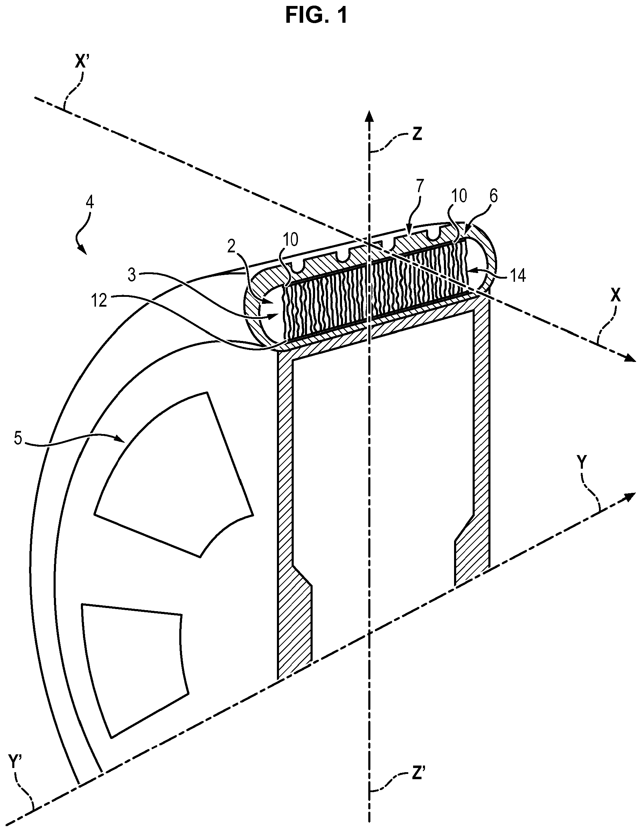

Comme visible sur la figure 1 qui illustre un exemple de pneumatique 4, un pneumatique 4 présente une surface de roulement, (c'est-à-dire une surface destinée à entrer en contact avec un sol), un plan de roulement (c'est-à-dire un plan normal à l'axe de révolution Y-Y' et qui intersecte la surface de roulement), un axe circonférentiel X-X' (qui correspond à un axe du plan de roulement qui est tangent à la surface de roulement) et un axe radial Z-Z' (qui correspond à un axe transversal à l'axe de révolution Y-Y' du pneumatique 4 et qui intersecte l'axe de révolution Y-Y').

De manière connue en soi, le pneumatique 4 comprend, de l'axe de révolution Y-Y' vers sa surface de roulement, une carcasse, un sommet agencé radialement à l'extérieur de la carcasse 3 et une bande de roulement 7.

La carcasse est une structure de révolution comprenant une nappe de carcasse comprenant des éléments de renfort de carcasse. Les éléments de renfort de carcasse sont sensiblement parallèles les uns aux autres selon une direction donnée et forment un angle supérieur ou égal à 65°, de préférence supérieur ou égal à 80° et ici plus préférentiellement sensiblement égal à 90° avec l'axe circonférentiel du pneumatique 4. Les éléments de renfort de carcasse peuvent notamment comprendre des éléments de renfort filaires textiles, par exemple comprenant deux brins de polyester de 144 tex enroulés à 290 tours ensemble.

Le sommet 6 est une structure de révolution agencée radialement à l'extérieur de la carcasse et comprend deux nappes de travail et une nappe de frettage.

Chaque nappe de travail comprend des éléments de renfort de travail. Les éléments de renfort de travail sont sensiblement parallèles les uns aux autres selon une direction et forment un angle allant de 15° et 40°, de préférence allant de 20° à 30° avec l'axe circonférentiel du pneumatique 4 et ici égal à 26°. Les éléments de renfort de travail sont croisés d'une nappe de travail par rapport à l'autre. Ils peuvent notamment comprendre des éléments de renfort filaires métalliques, par exemple des câbles de structure 2 x 0.30 mm.

La nappe de frettage est agencée radialement à l'extérieur des nappes de travail et comprend des éléments de renfort filaires de frettage sensiblement parallèles les uns aux autres formant un angle au plus égal à 10°, de préférence allant de 5° à 10° avec la direction circonférentielle du pneumatique 4 et ici égal à 5°. Les éléments de renfort de frettage peuvent comprendre des éléments de renfort filaires textiles, par exemple comprenant deux brins d'aramide de 167 tex enroulés à 315 tours ensemble.

La bande de roulement 7 est agencée radialement à l'extérieur du sommet et est destinée à entrer en contact avec un sol. La surface de roulement correspond donc à tout ou partie de la face radialement externe de la bande de roulement.

La nappe de carcasse, les nappes de travail et la nappe de frettage sont réalisées dans une ou plusieurs compositions polymériques, par exemple des compositions élastomériques comprenant au moins un élastomère, de préférence diénique, par exemple du caoutchouc naturel, dans laquelle sont noyés les éléments de renfort correspondants.

La bande de roulement 7 est réalisée dans une composition polymérique, par exemple une composition élastomérique comprenant au moins un élastomère, de préférence diénique, par exemple du caoutchouc naturel.

Afin d'améliorer la mise à plat du pneumatique 4, il a été proposé de remplacer tout ou partie de la carcasse par un assemblage comprenant une première structure formée de premiers éléments filaires, une deuxième structure formée de deuxièmes éléments filaires et une structure porteuse comprenant des éléments filaires porteurs reliant la première structure et la deuxième structure. La première structure et la deuxième structure peuvent être enduites ou imprégnées avec une composition élastomérique, typiquement du caoutchouc, par exemple par calandrage.

Cet assemblage peut par exemple être formé d'un tissu tridimensionnel ou d'un tricot tridimensionnel. On pourra notamment se référer aux documents WO2017/103491 et WO2017/103490, au nom de la Demanderesse, qui décrivent des exemples d'assemblages et leurs procédés de fabrication.

Un tel assemblage permet d'améliorer significativement la mise à plat de la bande de roulement lorsque le pneumatique 4 est soumis à une charge.

Toutefois, la Demanderesse s'est aperçue du fait que la mise à plat de la bande de roulement était encore améliorée lorsque la structure supérieure et la structure inférieure de l'assemblage étaient parfaitement alignées dans le pneumatique 4. Or il arrive fréquemment, lors de la manutention de l'assemblage, que l'une des structures glisse par rapport à l'autre, la structure porteuse n'était alors pas tendue et ne pouvant donc empêcher leur mouvement relatif.

Le document "Development of multilayered woven panels with integrated stiffeners in the transverse and longitudinal directions for thermoplastic lightweight applications", Adil Mountasir et al., TEXTILE RESEARCH JOURNAL, GB, (20130928), vol. 83, no. 14, décrit le tissage de préformes tridimensionnelles comprenant des raidisseurs intégrés.

### RESUME DE L'INVENTION

Un objectif de l'invention est de proposer un nouvel assemblage, un procédé de réalisation associé ainsi qu'un pneumatique et un procédé de fabrication d'un tel pneumatique, qui permettent de s'affranchir des difficultés d'alignement de la première et de la deuxième structure de l'assemblage de manière simple, efficace et peu coûteuse sans pour autant ralentir la fabrication de l'assemblage et du pneumatique, et qui permette de garantir l'obtention d'un pneumatique dont la mise à plat de la bande de roulement est nettement améliorée.

Pour cela, l'invention propose un procédé de fabrication d'un sous-assemblage pour un pneumatique comprenant les étapes suivantes :
- fournir un ensemble comprenant une première structure, une deuxième structure et une structure porteuse,
   - la première structure étant formée d'éléments filaires et présentant un bord longitudinal s'étendant suivant une première direction qui définit un premier axe,
   - la deuxième structure étant formée d'éléments filaires et présentant un bord longitudinal s'étendant suivant une deuxième direction qui définit un deuxième axe
   - la structure porteuse comprenant des éléments filaires porteurs reliant la première structure et la deuxième structure
- positionner la première structure sur la deuxième structure de telle sorte que le premier axe et le deuxième axe sont sensiblement parallèles, et
- fixer solidairement la première structure sur la deuxième structure à l'aide d'un élément de solidarisation de sorte à maintenir la première structure en position par rapport à la deuxième structure et à empêcher tout mouvement de la première structure par rapport à la deuxième structure afin d'obtenir un assemblage, et
- découper l'assemblage le long de l'élément de solidarisation de manière à séparer ledit élément de solidarisation du reste de l'assemblage et à obtenir au moins un sous-assemblage dépourvu d'élément de solidarisation.

Certaines caractéristiques préférées mais non limitatives du procédé de fabrication décrit ci-dessus sont les suivantes, prises individuellement ou en combinaison :
- le procédé comprend en outre, préalablement à l'étape de fixation, une étape au cours de laquelle le premier axe et le deuxième axe sont superposés.
- la première structure et la deuxième structure comprennent chacune un bord transversal s'étendant transversalement à leur bord longitudinal respectif, le procédé comprenant en outre, préalablement à l'étape de fixation, une étape au cours de laquelle le bord transversal de la première structure et le bord transversal de la deuxième structure sont superposés.
- la première structure présentant deux bords transversaux opposés, lesdits bords transversaux s'étendant transversalement au bord longitudinal de la première structure, une longueur de la première structure étant égale à une plus courte distance entre ses bords transversaux lorsque la première structure est à plat, et dans lequel la première structure est fixée sur tout ou partie de sa longueur sur la deuxième structure.
- la première structure est fixée sur tout ou partie de sa longueur sur la deuxième structure suivant une direction parallèle au premier axe.
- la première structure est fixée sur au moins 50% de sa longueur sur la deuxième structure.
- la première structure est fixée de manière discontinue sur la deuxième structure de sorte que l'élément de solidarisation comprend au moins deux segments adjacents s'étendant dans le prolongement l'un de l'autre.
- la première structure est fixée sur la deuxième structure le long de segments ponctuels ou linéaires.
- la première structure est fixée sur la deuxième structure à l'aide de l'une au moins des techniques suivantes : collage, soudure, couture.
- la première structure est fixée solidairement à la deuxième structure à l'aide d'au moins deux éléments de solidarisation distincts.
- la première structure est fixée sur la deuxième structure le long d'au moins deux éléments de solidarisation qui s'étendent sensiblement parallèlement l'un à l'autre.
- l'étape de découpe comprend les sous-étapes suivantes : découper l'assemblage suivant une première ligne de découpe l'élément de solidarisation de manière à obtenir le sous-assemblage dépourvu d'élément de solidarisation, et découper l'assemblage suivant une deuxième ligne de découpe l'élément de solidarisation de manière à le séparer du reste de l'assemblage et former un deuxième sous-assemblage. Et/ou
- les sous-étapes de découpe de l'assemblage suivant la première ligne de découpe et suivant la deuxième ligne de découpe sont réalisées simultanément.

Selon un deuxième aspect qui n'est pas revendiqué, il est décrit également un pneumatique présentant un axe de révolution et comprenant :
- un sous-assemblage obtenu conformément à un procédé de fabrication comme décrit ci-dessus, et
- un espace annulaire délimité radialement par une face interne de la première structure et par une face interne de la deuxième structure.

### BREVE DESCRIPTION DES DESSINS

D'autres caractéristiques, buts et avantages de la présente invention apparaîtront mieux à la lecture de la description détaillée qui va suivre, et au regard des dessins annexés donnés à titre d'exemples non limitatifs et sur lesquels :
La figure 1 est une vue en perspective et en coupe partielle d'un exemple de réalisation d'un pneumatique selon un mode de réalisation de l'invention représenté en l'absence de charge appliquée et de pression.
La figure 2 est une vue en perspective d'un exemple de réalisation d'un assemblage conforme à un mode de réalisation de l'invention, sur laquelle la structure porteuse de l'assemblage a été omise.

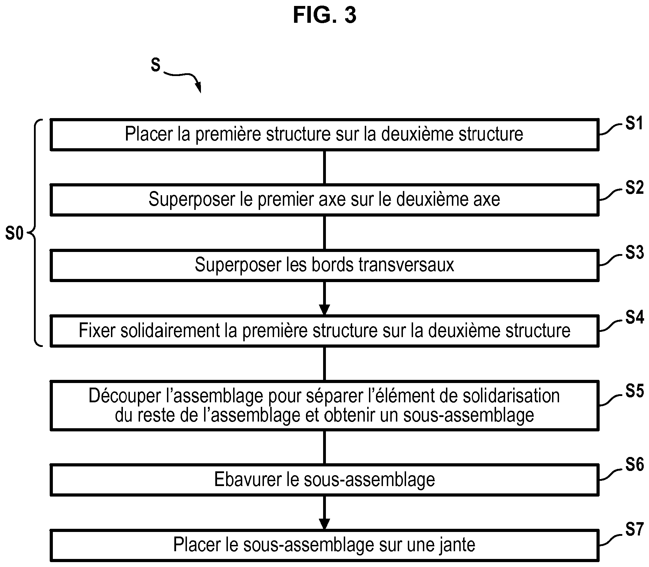

La figure 3 est un organigramme illustrant des étapes d'un procédé de fabrication d'un pneumatique conforme à un mode de réalisation de l'invention.
Les figures 4a et 4b illustrent respectivement une vue en coupe le long d'un élément de solidarisation et une vue en perspective d'un premier exemple de réalisation d'un assemblage pouvant être utilisé dans un procédé de fabrication conforme à l'invention.
Les figures 5a et 5b illustrent respectivement une vue en coupe le long d'un élément de solidarisation et une vue en perspective d'un deuxième exemple de réalisation d'un assemblage pouvant être utilisé dans un procédé de fabrication conforme à l'invention.
Les figures 6a et 6b illustrent respectivement une vue en coupe le long d'un élément de solidarisation et une vue en perspective d'un troisième exemple de réalisation d'un assemblage pouvant être utilisé dans un procédé de fabrication conforme à l'invention.

### DESCRIPTION DETAILLEE D'UN MODE DE REALISATION

### Assemblage 1

L'assemblage 1 comprend :
- une première structure 10 formée d'éléments filaires,
- une deuxième structure 12 formée d'éléments filaires, et
- une structure porteuse 14 comprenant des éléments filaires porteurs reliant la première structure 10 et la deuxième structure 12.

Des exemples d'assemblages 1 comprenant ces trois structures 10, 12, 14 et pouvant être utilisés ont par exemple été décrits en détails dans les documents WO2017/103490 et WO2017/103491 décrits ci-avant.

Plus précisément, la première structure 10 est globalement trapézoïdale (par exemple parallélépipédique ou rectangulaire) et présente un premier bord longitudinal 10a s'étendant suivant une première direction qui définit un premier axe 11, un deuxième bord longitudinal 10b opposé au premier bord longitudinal 10a et deux bords transversaux opposés 10c, 10d, s'étendant transversalement aux premier et deuxième bords longitudinaux 10a, 10b.

De même, la deuxième structure 12 comprenant est globalement trapézoïdale (par exemple parallélépipédique ou rectangulaire) et présente un premier bord longitudinal 12a s'étendant suivant une deuxième direction qui définit un deuxième axe 13, un deuxième bord longitudinal 12b opposé au premier bord longitudinal 12a et deux bords transversaux 12c, 12d opposés, s'étendant transversalement aux premier et deuxième bords longitudinaux 12a, 12b.

Dans un mode de réalisation, la première et la deuxième structure 10, 12 peuvent comprendre un tissu formé d'un entrecroisement de fils de chaine (les éléments filaires de la première et de la deuxième structure 10, 12) et de fils de trame. L'assemblage 1 est alors un tissu tridimensionnel.

En variante, la première et la deuxième structure 10, 12 peuvent comprendre un tricot, auquel cas l'assemblage 1 est un tricot tridimensionnel.

Quelle que soit la variante de réalisation, l'armature du tissu de la première et/ou de la deuxième structure 12 peut être de type toile, serge, tricot ou satin. Dans le cas d'un assemblage 1 pour un pneumatique 4, une armure de type toile permet d'atteindre de bonnes performances mécaniques.

Selon une autre variante encore, l'une parmi la première et la deuxième structure 10, 12 comprend un tissu, l'autre parmi la première et la deuxième structure 10, 12 pouvant comprendre alors un tricot.

Typiquement, l'assemblage 1 peut comprendre un tissu ou un tricot tridimensionnel du type armure toile simple ou double paroi, tel que par exemple : le tissu double paroi PF-Farbroller-GR3-7103_01 commercialisé par la société PILE FABRICS GmbH ; le tricot N-02570-A01 commercialisé par la société HEATHCOAT FABRICS Limited.

L'assemblage 1 comprend en outre un élément de solidarisation 18 fixant solidairement la première structure 10 sur la deuxième structure 12 afin d'empêcher leur mouvement respectif de telle sorte que le premier axe 11 et le deuxième axe 13 soient parallèles. On comprendra bien entendu que, dans cette configuration, la première et la deuxième structure 10, 12 sont fixées l'une sur l'autre.

De préférence, le premier axe 11 et le deuxième axe 13 sont en outre superposés et/ou les premiers et deuxièmes bords transversaux 10a, 12a, 10b, 12b de la première et de la deuxième structure 12, respectivement, sont superposés. Par superposés, on comprendra ici que le premier axe 11 et le deuxième axe 13 (respectivement les premiers et deuxième bords transversaux 10a, 12a, 10b, 12b) appartiennent à un plan déterminé qui correspond au plan passant par le premier axe 11 (respectivement le premier bord transversal 10a ou le deuxième bord transversal 10b) et qui est perpendiculaire à la surface de la première structure 10 lorsque la première structure 10 est posée à plat sur une surface plane.

La tolérance d'alignement du premier axe 11 et du deuxième axe 13 et la tolérance de superposition des bords (longitudinaux 10a, 12a, 10b, 12b et/ou transversaux 10c, 12c, 10d, 12d) est inférieure ou égale à deux millimètres, de préférence inférieure ou égale à un millimètre.

Dans une forme de réalisation, à la fois le premier axe 11 et le deuxième axe 13 d'une part et les bords transversaux 10c, 10d, 12c, 12d de la première et de la deuxième structure 12 d'autre part sont superposés, de sorte que la première et la deuxième structure 10, 12 sont parfaitement superposées et alignées (avec une tolérance inférieure ou égale à deux millimètres, de préférence inférieure ou égale à un millimètre). Cet alignement est en outre assuré pendant l'intégralité de la manutention de l'assemblage 1, jusqu'à au moins sa première pose sur un tambour de confection 5 de pneumatique 4, grâce à l'élément de solidarisation 18 qui permet leur fixation solidaire.

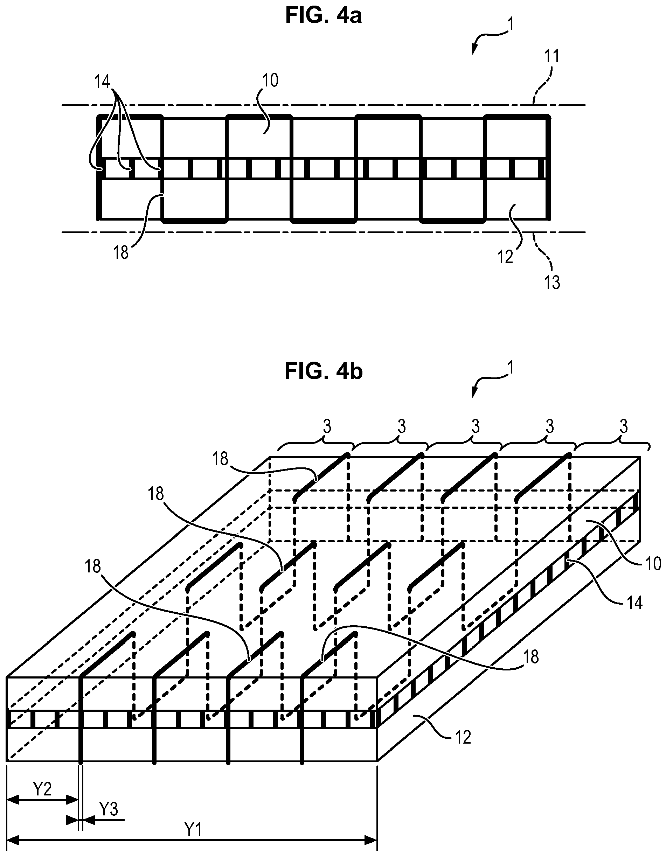

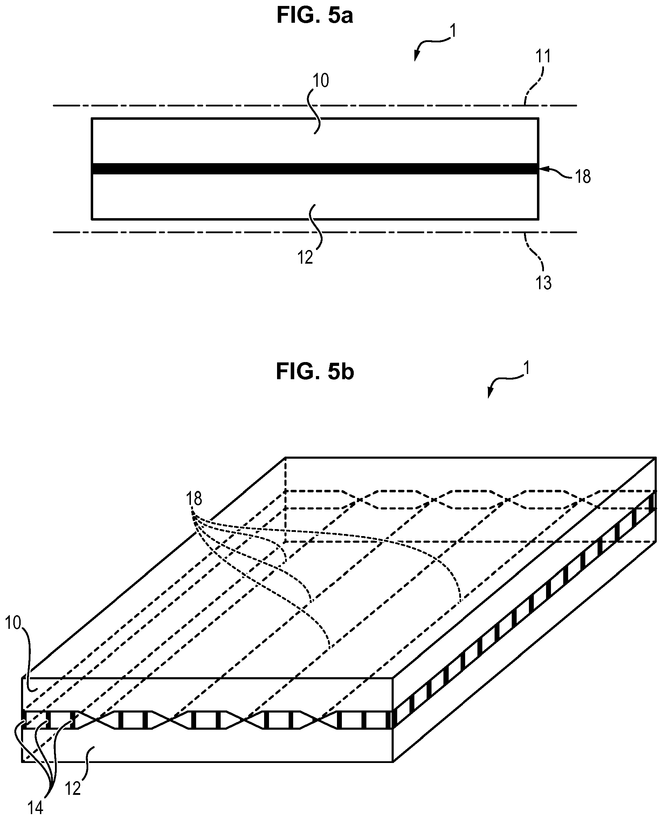

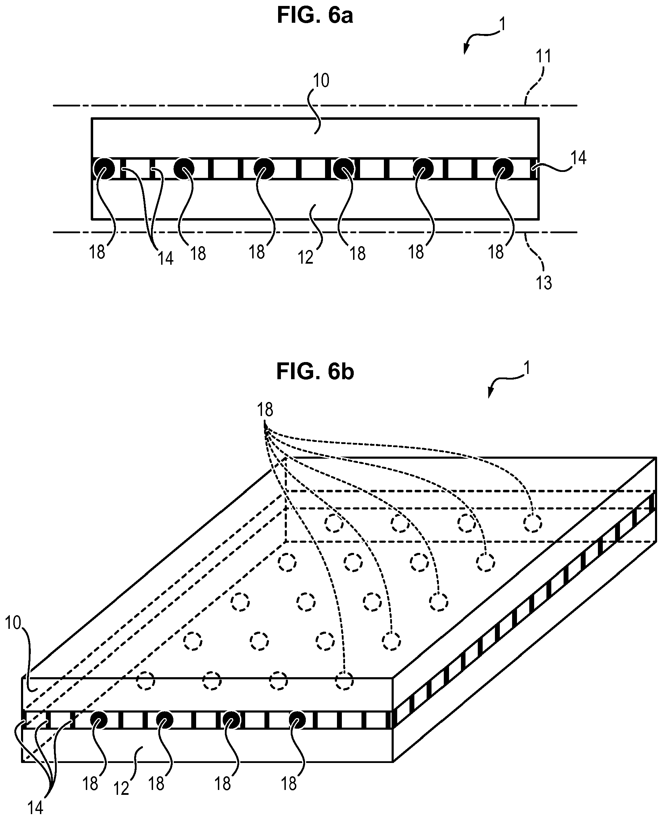

L'élément de solidarisation 18 peut comprendre l'un au moins des éléments suivants : un adhésif 18 (comme illustré par exemple en figures 6a et 6b), une ligne de soudure 18 (comme illustré par exemple en figures 5a et 5b) et/ou un fil de couture 18 (comme illustré par exemple en figures 4a et 4b). Une combinaison de ces éléments au sein d'un même assemblage 1 peut bien entendu être envisagée.

De préférence, l'adhésif 18 comprend une colle non intrusive du point de vue industriel. Par exemple, l'adhésif 18 peut comprendre une colle comme par exemple la loctite 3421 A&B. Selon le type de colle, une étape de polymérisation de la colle peut être envisagée. L'adhésif 18 peut alors être appliqué par points, comme illustré sur les figures 6a et 6b, ou de manière linéaire (non visible sur les figures).

La ligne de soudure 18 peut être réalisée par exemple par soudure à ultrasons, par lame chauffante, par laser ou par hautes fréquences. Sur les figures 5a et 5b, les lignes de soudure 18 sont continues. Ceci n'est cependant pas limitatif, les lignes de soudure 18 pouvant être discontinues, comme nous le verrons dans ce qui suit.

La couture peut être réalisée à l'aide d'un fil 18 capable de supporter les températures d'encollage. De préférence, le fil de couture présente donc une température de fusion supérieure à 200°C. Typiquement, certains polyamides et polyesters sont susceptibles d'être utilisés. Le fil de couture 18 est alors entrelacé avec les éléments filaires de la première structure 10 et avec les éléments filaires de la deuxième structure 12, de manière à les maintenir fixées solidairement. Un exemple d'entrelacement est par exemple illustré en figures 4a et 4b. Dans cet exemple, l'entrelacement est réalisé suivant un pas régulier : un pas irrégulier ou périodique est cependant également envisageable.

Dans une forme de réalisation, l'élément de solidarisation 18 s'étend suivant un axe parallèle au premier 11 et au deuxième axe 13. Comme nous le verrons par la suite, une telle configuration de l'élément de solidarisation 18 permet alors de limiter les chutes d'assemblage 1 lors de la réalisation d'un sous-assemblage 3 1 en vue de fabriquer un pneumatique 4.

Dans tous les cas, l'élément de solidarisation 18 peut être définitif, c'est-à-dire qu'il ne rompt pas lorsqu'il est soumis à des manipulations normales lors de la réalisation de l'assemblage 1, sa manutention, sa mise en place sur la jante. Par ailleurs, l'élément de solidarisation 18 est de préférence fixe par rapport à la première et à la deuxième structure 10, 12 et non élastique (c'est-à-dire que sa longueur est constante dans les conditions normales d'utilisation).

L'élément de solidarisation 18 peut s'étendre de manière continue ou discontinue entre les bords transversaux des première et deuxième structures 10, 12.

Par continue, on comprendra ici que l'élément de solidarisation 18 s'étend sur toute la longueur L de la première structure 10 (qui correspond à la plus petite distance entre les bords transversaux 10c, 10d de la première structure 10 lorsque la première structure 10 est à plat ou, plus simplement, à la longueur L de ses bords longitudinaux 10a, 10b lorsque la première structure 10 est parallélépipédique ou rectangulaire).

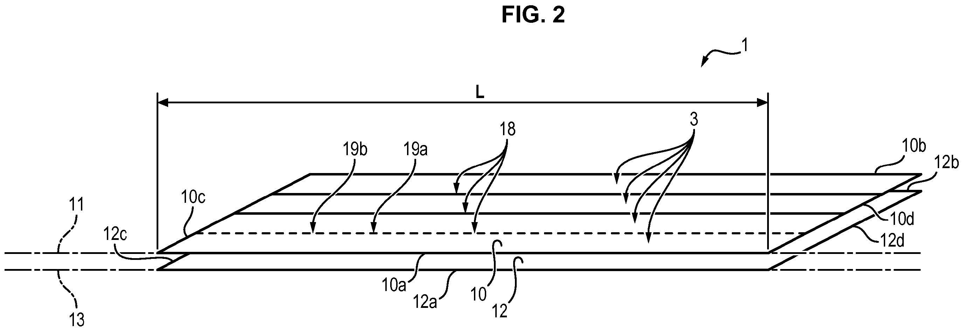

Par discontinue, on comprendra ici que l'élément de solidarisation 18 s'étend sur une partie seulement de la longueur L de la première structure 10, de préférence sur au moins 50% de sa longueur L. Dans ce cas, comme illustré par exemple sur la figure 2, l'élément de solidarisation 18 comprend de préférence au moins deux segments 19a adjacents séparés d'une distance 19b. Afin de garantir que la première structure 10 et la deuxième structure restent parfaitement alignées et superposées en tout point de l'assemblage 1, même lors de la manutention de l'assemblage 1, la distance 19b peut notamment être au plus égale à un mètre. Dans un mode de réalisation, la distance 19b est inférieure à un mètre, de préférence inférieure à 75 cm. Les segments 19a peuvent être ponctuels, c'est-à-dire que leur plus grande dimension est de l'ordre de quelques millimètres, ou être linéaires, c'est-à-dire que leur plus grande dimension est égale à plusieurs centimètres voire plusieurs mètres. Afin de couvrir au moins 50% de la longueur L de la première structure 10, on comprendra que le nombre de segments 19a de l'élément de solidarisation 18 augmente lorsque leur dimension diminue.

La largeur y3 (dimension dans le plan de la première structure 10 et s'étendant suivant une direction perpendiculaire aux bords longitudinaux 10a, 10b de la première structure 10) de l'élément de solidarisation 18 peut être continue sur la longueur L de la première structure 10, ou variable. Une largeur y3 continue est cependant plus aisée à réaliser industriellement.

L'élément de solidarisation 18 peut s'étendre le long et de manière adjacente à l'un des bords longitudinaux 10a, 10b de la première structure 10 ou en variante à distance dudit bord longitudinal 10a, 10b.

Par ailleurs, selon la largeur y2 désirée pour le sous-assemblage 3 1, l'assemblage 1 peut comprendre un ou plusieurs éléments de solidarisation 18.

La largeur y3 de l'élément de solidarisation 18 et la largeur y1 de la première structure 10 pourront être aisément déterminées par un homme du métier et dépend notamment :
- de la largeur y2 des sous-assemblages 3 à réaliser dans l'assemblage 1. Typiquement, si un opérateur souhaite obtenir un sous-assemblage 3 dont la largeur y2 est plus grande que la moitié de la largeur y1 des bords transversaux 10c, 10d de la première structure 10, la largeur y3 de l'élément de solidarisation 18 pourra au plus égale à la différence entre la largeur y1 de la première structure 10 et la largeur y2 du sous-assemblage 3 (sachant qu'il peut être envisagé de prévoir une marge afin d'assurer la possibilité d'ébavurer S6 le sous-assemblage 3 1 obtenu). De même, si un opérateur souhaite obtenir n sous-assemblages 3, la largeur y1 de l'assemblage est choisie de sorte à être au moins égale à la somme n*y2 + (n-1)*y3, étant rappelé qu'y2 est la largeur souhaitée pour les sous-assemblage 3 et y3 est la largeur nécessaire pour les éléments de solidarisation 18. En pratique, afin de réduire les chutes, la largeur y1 de la première structure 10 est choisie de manière à être sensiblement égale à la somme n*y2 + (n-1)*y3.
- du type d'élément de solidarisation 18 utilisé.
- du caractère continu ou discontinu de l'élément de solidarisation 18, et le cas échéant de la distance 19b entre deux segments 19a d'éléments de solidarisation 18.

De manière optionnelle, la face externe (c'est-à-dire la face opposée à l'espace 2 formé entre la première et la deuxième structure 10, 12) de la première structure 10 et la deuxième structure 12 peut être imprégnée d'une composition élastomérique.

### Procédé de réalisation S0 d'un assemblage 1

Un exemple de réalisation S0 d'un tel assemblage 1 va à présent être décrit.

Au cours d'une première étape S1, un ensemble comprenant une première structure 10, une deuxième structure 12 et une structure porteuse 14 est amené. Cet ensemble est généralement réalisé préalablement de manière connue en soi et/ou peut être fourni sous forme de rouleau, par exemple auprès des sociétés PILE FABRICS GmbH ou GIRMES INTERNATIONAL GmbH.

Dans le cas où l'ensemble est fourni sous la forme d'un rouleau, l'ensemble est déroulé et placé à plat de sorte que l'une parmi la première et la deuxième structure 10, 12 se trouve sur une surface support. Dans cette position, la première et la deuxième structure 10, 12 sont donc empilées sur la surface support, les éléments filaires de la structure porteuse 14 étant déjà entrelacés avec les éléments filaires de la première et de la deuxième structure 12.

Au cours d'une deuxième étape S2, la position de la première et de la deuxième structure 10, 12 est ajustée de sorte que le premier axe 11 et le deuxième axe 13 deviennent parallèles, et le cas échéant superposés. De manière optionnelle, au cours d'une troisième étape S3, leur position est également ajustée de sorte que leurs premiers bords transversaux 10c, 12c et/ou leurs deuxièmes bords transversaux 10d, 12d soient superposés.

De préférence, la position de la première et de la deuxième structure 10, 12 est ajustée de sorte que le premier axe 11 et le deuxième axe 13 soient parallèle et superposés et que leur premier et deuxième bord transversal 10c, 10d, 12c, 12d soient superposés. On comprendra bien entendu que les étapes S1, S2 et S3 peuvent être réalisées simultanément ou successivement, auquel cas ces étapes S1, S2 et S3 peuvent être sont mises en œuvre dans un ordre différent sans sortir pour autant de la portée de l'invention.

Lors de ces étapes S1, S2 et/ou S3, la première et la deuxième structure 10, 12 peuvent être à plat sur toute leur longueur L, ou en variante l'ensemble peut n'être déroulé qu'en partie, le reste de l'ensemble étant déroulé au fur et à mesure pendant la troisième étape du procédé S0.

Au cours d'une quatrième étape S4, la première et la deuxième structure 10, 12 sont fixées solidairement par au moins un élément de solidarisation 18 afin d'empêcher leur mouvement respectif.

La première et la deuxième structure 10, 12 peuvent être fixées solidairement par un unique élément de solidarisation 18 afin d'empêcher leur mouvement respectif. En variante, la première et la deuxième structure 10, 12 peuvent être fixées solidairement par plusieurs éléments de solidarisation 18 distincts. Dans ce cas, les éléments de solidarisation 18 distincts s'étendent de préférence parallèlement les uns aux autres, afin d'optimiser le nombre de sous-assemblages 3 susceptibles d'être fabriqués à partir de l'assemblage 1.

La fixation S4 peut être réalisée par collage (auquel cas l'élément de solidarisation 18 comprend un adhésif 18) (voir par exemple figures 6a et 6b), par soudure à ultrason (auquel cas l'élément de solidarisation 18 comprend une ligne de soudure 18) (voir par exemple figures 5a et 5b) et/ou par couture (auquel cas l'élément de solidarisation 18 comprend un fil de couture 18 (voir par exemple figures 4a et 4b).

En variante, les étapes S1 à S4 peuvent être réalisées directement chez le tisseur dans le métier à tisser utilisé pour la réalisation de l'ensemble, afin de garantir que la première et la deuxième structure 10, 12 sont parfaitement alignées et éviter des opérations d'enroulage et de déroulage susceptibles de générer des difficultés d'alignement.

De manière optionnelle, la face externe de la première structure 10 et la deuxième structure 12 peuvent être imprégnées d'une composition élastomérique, typiquement du caoutchouc, par exemple par calandrage. Cette imprégnation peut être réalisée après la fixation solidaire S4 des première et deuxième structure 12 par l'élément de solidarisation 18.

Le cas échéant, l'assemblage 1 peut ensuite être manutentionné et notamment enroulé autour d'un cylindre en vue de son stockage avant son utilisation. Cette manutention est notamment facilitée par la fixation solidaire de la première structure 10 avec la deuxième structure 12, qui évite tout glissement de l'une des structures 10, 12 par rapport à l'autre 12, 10.

### Procédé de fabrication S d'un pneumatique 4

L'assemblage 1 ainsi obtenu peut notamment être utilisé dans la fabrication S d'un pneumatique 4.

Pour cela, au cours d'une cinquième étape S5, l'élément de solidarisation 18 est séparé des première et deuxième structure 12, par exemple par découpe.

La découpe de l'élément de solidarisation 18 peut être réalisée en une seule fois ou en plusieurs fois, par exemple en découpant simultanément ou successivement l'assemblage 1 de part et d'autre de l'élément de solidarisation 18, sur toute la longueur L de la première structure 10.

Après découpe S5, on obtient alors au moins un sous-assemblage 3 1, comprenant la partie de la première structure 10, de la deuxième structure 12 et de la structure porteuse 14 qui s'étendait de l'un des bords longitudinaux 10a, 10b de la première structure 10 jusqu'à l'élément de solidarisation 18.

Lorsque l'assemblage 1 comprend plusieurs éléments de solidarisation 18, ces éléments de solidarisation 18 peuvent être séparés S5 simultanément ou successivement du reste de l'assemblage 1, de manière à former plusieurs sous-assemblages 3.

Au cours d'une sixième étape S6, optionnelle, le ou les sous-assemblage 3(s) peu(ven)t être ébavuré(s).

Au cours d'une septième étape S7, l'un des sous-assemblages 3 ainsi obtenus est alors placé sur un tambour de confection 5 en vue de réaliser un pneumatique 4.

On notera en particulier que la fixation solidaire des première et deuxième structures 10, 12 à l'aide des éléments de solidarisation 18 permet de garantir le positionnement correct de la première structure 10 par rapport à la deuxième structure 12 jusqu'à leur pose sur le tambour de confection 5, même si ce retrait intervient avant ladite pose, les risques de glissement de la première structure 10 par rapport à la deuxième structure 12 (ou inversement) étant principalement dû à la manutention et au stockage de l'assemblage 1.

Au cours d'une huitième étape (voir figure 1), un espace annulaire 2 délimité radialement par une face interne de la première structure 10 et une face interne de la deuxième structure 12 est formé. L'espace annulaire 2 peut par exemple être formé par gonflage.

Au cours d'une neuvième étape, le pneumatique 4 est alors formé en rapportant et en fixant successivement un sommet et une bande de roulement. Le sommet 6 et la bande de roulement 7 peuvent être conventionnels.

On pourra notamment se référer aux documents WO2017/103490 et WO 2017/103491 décrits ci-avant pour plus de détails sur des moyens de fabrication d'un pneumatique 4 avec un tel assemblage 1.

## Revendications

1. Procédé de fabrication (S) d'un sous-assemblage (3) pour un pneumatique (4) comprenant les étapes suivantes :
- fournir un ensemble comprenant une première structure (10), une deuxième structure (12) et une structure porteuse (14),
- la première structure (10) étant formée d'éléments filaires et présentant un bord longitudinal (10a, 10b) s'étendant suivant une première direction qui définit un premier axe (11),
- la deuxième structure (12) étant formée d'éléments filaires et présentant un bord longitudinal (12a, 12b) s'étendant suivant une deuxième direction qui définit un deuxième axe (13)
- la structure porteuse (14) comprenant des éléments filaires porteurs reliant la première structure (10) et la deuxième structure (12)
- positionner (S1) la première structure (10) sur la deuxième structure (12) de telle sorte que le premier axe (11) et le deuxième axe (13) sont sensiblement parallèles, et
- fixer solidairement (S4) la première structure (10) sur la deuxième structure (12) à l'aide d'un élément de solidarisation (18) de sorte à maintenir la première structure (10) en position par rapport à la deuxième structure (12) et à empêcher tout mouvement de la première structure (10) par rapport à la deuxième structure (12) afin d'obtenir un assemblage (1),
le procédé étant **caractérisé en ce qu'**il comprend l'étape suivante :
- découper (S5) l'assemblage (1) le long de l'élément de solidarisation (18) de manière à séparer ledit élément de solidarisation (18) du reste de l'assemblage (1) et à obtenir au moins un sous-assemblage (3) dépourvu d'élément de solidarisation (18).

2. Procédé de fabrication (S) d'un sous-assemblage (3) selon la revendication 1, comprenant en outre, préalablement à l'étape de fixation (S4), une étape (S2) au cours de laquelle le premier axe (11) et le deuxième axe (13) sont superposés.

3. Procédé de fabrication (S) d'un sous-assemblage (3) selon l'une des revendications 1 ou 2, dans lequel la première structure (10) et la deuxième structure (12) comprennent chacune un bord transversal (10c, 12c ; 10d, 12d) s'étendant transversalement à leur bord longitudinal (10a, 10b; 12a, 12b) respectif, le procédé comprenant en outre, préalablement à l'étape de fixation (S4), une étape (S3) au cours de laquelle le bord transversal (10c, 10d) de la première structure (10) et le bord transversal (12c, 12d) de la deuxième structure (12) sont superposés.

4. Procédé de fabrication (S) d'un sous-assemblage (3) selon l'une des revendications 1 à 3, la première structure (10) présentant deux bords transversaux (10c, 10d) opposés, lesdits bords transversaux s'étendant transversalement au bord longitudinal (10a, 10b) de la première structure, une longueur (L) de la première structure (10) étant égale à une plus courte distance entre ses bords transversaux (10c, 10d) lorsque la première structure (10) est à plat, et dans lequel la première structure (10) est fixée (S4) sur tout ou partie de sa longueur (L) sur la deuxième structure (12).

5. Procédé de fabrication (S) d'un sous-assemblage (3) selon la revendication 4, dans lequel la première structure (10) est fixée (S4) sur tout ou partie de sa longueur (L) sur la deuxième structure suivant une direction parallèle au premier axe (11).

6. Procédé de fabrication (S) d'un sous-assemblage (3) selon la revendication 5, dans lequel la première structure (10) est fixée (S4) sur au moins 50% de sa longueur (L) sur la deuxième structure (12).

7. Procédé de fabrication (S) d'un sous-assemblage (3) selon la revendication 6, dans lequel la première structure (10) est fixée (S4) de manière discontinue sur la deuxième structure (12) de sorte que l'élément de solidarisation (18) comprend au moins deux segments adjacents s'étendant dans le prolongement l'un de l'autre.

8. Procédé de fabrication d'un sous-assemblage selon la revendication 7, dans lequel la première structure (10) est fixée (S4) sur la deuxième structure (12) le long de segments ponctuels ou linéaires.

9. Procédé de fabrication (S) d'un sous-assemblage (3) selon l'une des revendications 1 à 8, dans lequel la première structure (10) est fixée (S4) sur la deuxième structure (12) à l'aide de l'une au moins des techniques suivantes : collage, soudure, couture.

10. Procédé de fabrication (S) d'un sous-assemblage (3) selon l'une des revendications 1 à 9, dans lequel la première structure (10) est fixée solidairement (S4) à la deuxième structure (12) à l'aide d'au moins deux éléments de solidarisation distincts (18).

11. Procédé de fabrication (S) d'un sous-assemblage (3) selon la revendication 10, dans lequel la première structure (10) est fixée (S4) sur la deuxième structure (12) le long d'au moins deux éléments de solidarisation (18) qui s'étendent sensiblement parallèlement l'un à l'autre.

12. Procédé de fabrication (S) d'un sous-assemblage (3) selon l'une des revendications 1 à 11, dans lequel l'étape de découpe (S5) comprend les sous-étapes suivantes :
- découper suivant une première ligne de découpe l'élément de solidarisation (18) de manière à obtenir le sous-assemblage (3) dépourvu d'élément de solidarisation (18), et
- découper suivant une deuxième ligne de découpe l'élément de solidarisation (18) de manière à le séparer du reste de l'assemblage (1) et former un deuxième sous-assemblage (3).

13. Procédé de fabrication (S) d'un sous-assemblage (3) selon la revendication 12, dans lequel les sous-étapes de découpe de l'assemblage (1) suivant la première ligne de découpe et suivant la deuxième ligne de découpe sont réalisées simultanément.

## Patentansprüche

1. Verfahren (S) zur Herstellung einer Unterbaugruppe (3) für einen Reifen (4), umfassend die folgenden Schritte:
- Bereitstellen einer Baugruppe, die eine erste Struktur (10), eine zweite Struktur (12) und eine Stützstruktur (14) umfasst,
- wobei die erste Struktur (10) aus Drahtelementen ausgebildet ist und eine Längskante (10a, 10b) aufweist, die sich in einer ersten Richtung erstreckt, die eine erste Achse (11) definiert,
- wobei die zweite Struktur (12) aus Drahtelementen ausgebildet ist und eine Längskante (12a, 12b) aufweist, die sich in einer zweiten Richtung erstreckt, die eine zweite Achse (13) definiert,
- wobei die Stützstruktur (14) Stützdrahtelemente umfasst, die die erste Struktur (10) und die zweite Struktur (12) verbinden,
- Positionieren (S1) der ersten Struktur (10) auf der zweiten Struktur (12), so dass die erste Achse (11) und die zweite Achse (13) im Wesentlichen parallel sind, und
- Befestigen (S4) der ersten Struktur (10) an der zweiten Struktur (12) mit Hilfe eines Verbindungselements (18), um die erste Struktur (10) relativ zur zweiten Struktur (12) in Position zu halten und jede Bewegung der ersten Struktur (10) relativ zur zweiten Struktur (12) zu verhindern, um eine Baugruppe (1) zu erhalten,
wobei das Verfahren **dadurch gekennzeichnet ist, dass** es den folgenden Schritt umfasst:
- Durchschneiden (S5) der Baugruppe (1) entlang des Verbindungselements (18), um das Verbindungselement (18) vom Rest der Baugruppe (1) zu trennen und zumindest eine Unterbaugruppe (3) ohne das Verbindungselement (18) zu erhalten.

2. Verfahren (S) zur Herstellung einer Unterbaugruppe (3) nach Anspruch 1, ferner umfassend vor dem Befestigungsschritt (S4) einen Schritt (S2), bei dem die erste Achse (11) und die zweite Achse (13) übereinandergelegt werden.

3. Verfahren (S) zur Herstellung einer Unterbaugruppe (3) nach einem der Ansprüche 1 oder 2, wobei die erste Struktur (10) und die zweite Struktur (12) jeweils eine Querkante (10c, 12c; 10d, 12d) aufweisen, der sich quer zu ihrer jeweiligen Längskante (10a, 10b; 12a, 12b) erstreckt, wobei das Verfahren ferner vor dem Befestigungsschritt (S4) einen Schritt (S3) umfasst, bei dem die Querkante (10c, 10d) der ersten Struktur (10) und die Querkante (12c, 12d) der zweiten Struktur (12) übereinandergelegt werden.

4. Verfahren (S) zur Herstellung einer Unterbaugruppe (3) nach einem der Ansprüche 1 bis 3, wobei die erste Struktur (10) zwei gegenüberliegende Querkanten (10c, 10d) aufweist, wobei sich die Querkanten quer zur Längskante (10a, 10b) der ersten Struktur erstrecken, wobei eine Länge (L) der ersten Struktur (10) gleich einem kürzesten Abstand zwischen ihren Querkanten (10c, 10d) ist, wenn die erste Struktur (10) flach liegt, und wobei die erste Struktur (10) über ihre gesamte Länge (L) oder einen Teil davon an der zweiten Struktur (12) befestigt wird (S4).

5. Verfahren (S) zur Herstellung einer Unterbaugruppe (3) nach Anspruch 4, wobei die erste Struktur (10) über ihre gesamte Länge (L) oder einen Teil davon in einer zur ersten Achse (11) parallelen Richtung an der zweiten Struktur befestigt wird (S4).

6. Verfahren (S) zur Herstellung einer Unterbaugruppe (3) nach Anspruch 5, wobei die erste Struktur (10) über mindestens 50 % ihrer Länge (L) an der zweiten Struktur (12) befestigt wird (S4).

7. Verfahren (S) zur Herstellung einer Unterbaugruppe (3) nach Anspruch 6, wobei die erste Struktur (10) diskontinuierlich an der zweiten Struktur (12) befestigt wird (S4), so dass das Verbindungselement (18) mindestens zwei benachbarte Segmente umfasst, die sich in der Verlängerung des jeweils anderen erstrecken.

8. Verfahren zur Herstellung einer Unterbaugruppe nach Anspruch 7, wobei die erste Struktur (10) entlang punktueller oder linearer Segmente an der zweiten Struktur (12) befestigt wird (S4).

9. Verfahren (S) zur Herstellung einer Unterbaugruppe (3) nach einem der Ansprüche 1 bis 8, wobei die erste Struktur (10) mit Hilfe einer der folgenden Techniken an der zweiten Struktur (12) befestigt wird (S4): Kleben, Schweißen, Nähen.

10. Verfahren (S) zur Herstellung einer Unterbaugruppe (3) nach einem der Ansprüche 1 bis 9, wobei die erste Struktur (10) mit Hilfe mindestens zweier separater Verbindungselemente (18) an der zweiten Struktur (12) befestigt wird (S4).

11. Verfahren (S) zur Herstellung einer Unterbaugruppe (3) nach Anspruch 10, wobei die erste Struktur (10) entlang mindestens zweier Verbindungselemente (18), die sich im Wesentlichen parallel zueinander erstrecken, an der zweiten Struktur (12) befestigt wird (S4).

12. Verfahren (S) zur Herstellung einer Unterbaugruppe (3) nach einem der Ansprüche 1 bis 11, wobei der Trennschritt (S5) die folgenden Unterschritte umfasst:
- Durchschneiden des Verbindungselements (18) entlang einer ersten Schnittlinie, um die Unterbaugruppe (3) ohne das Verbindungselement (18) zu erhalten, und
- Durchschneiden des Verbindungselements (18) entlang einer zweiten Schnittlinie, um es vom Rest der Baugruppe (1) zu trennen und eine zweite Unterbaugruppe (3) auszubilden.

13. Verfahren (S) zur Herstellung einer Unterbaugruppe (3) nach Anspruch 12, wobei die Unterschritte des Durchschneidens der Baugruppe (1) entlang der ersten Schnittlinie und entlang der zweiten Schnittlinie gleichzeitig ausgeführt werden.

## Claims

1. Method for manufacturing (S) a subassembly (3) for a tyre (4) comprising the following steps:
- providing an assembly comprising a first structure (10), a second structure (12) and a supporting structure (14),
- the first structure (10) being formed by filamentary elements and having a longitudinal edge (10a, 10b) extending in a first direction which defines a first axis (11),
- the second structure (12) being formed by filamentary elements and having a longitudinal edge (12a, 12b) extending in a second direction which defines a second axis (13),
- the supporting structure (14) comprising supporting filamentary elements linking the first structure (10) and the second structure (12),
- positioning (S1) the first structure (10) on the second structure (12) such that the first axis (11) and the second axis (13) are substantially parallel, and
- securely fixing (S4) the first structure (10) onto the second structure (12) using a securing element (18) so as to hold the first structure (10) in position relative to the second structure (12) and to prevent any movement of the first structure (10) relative to the second structure (12) in order to obtain an assembly (1), said method being **characterized in that** it comprises the following step:
- cutting (S5) the assembly (1) along the securing element (18) so as to separate said securing element (18) from the rest of the assembly (1) and to obtain at least one subassembly (3) without securing element (18).

2. Method for manufacturing (S) a subassembly (3) according to Claim 1, further comprising, prior to the fixing step (S4), a step (S2) during which the first axis (11) and the second axis (13) are superposed.

3. Method for manufacturing (S) a subassembly (3) according to one of Claims 1 or 2, wherein the first structure (10) and the second structure (12) each comprise a transverse edge (10c, 12c; 10d, 12d) extending transversely to their respective longitudinal edge (10a, 10b; 12a, 12b), the method further comprising, prior to the fixing step (S4), a step (S3) during which the transverse edge (10c, 10d) of the first structure (10) and the transverse edge (12c, 12d) of the second structure (12) are superposed.

4. Method for manufacturing (S) a subassembly (3) according to one of Claims 1 to 3, the first structure (10) having two opposing transverse edges (10c, 10d), said transverse edges extending transversely to the longitudinal edge (10a, 10b) of the first structure, the length (L) of the first structure (10) being equal to a shorter distance between its transverse edges (10c, 10d) when the first structure (10) is laid flat, and wherein the first structure (10) is fixed (S4) over all or part of its length (L) onto the second structure (12).

5. Method for manufacturing (S) a subassembly (3) according to Claim 4, wherein the first structure (10) is fixed (S4) over all or part of its length (L) onto the second structure in a direction parallel to the first axis (11).

6. Method for manufacturing (S) a subassembly (3) according to Claim 5, wherein the first structure (10) is fixed (S4) over at least 50% of its length (L) onto the second structure (12).

7. Method for manufacturing (S) a subassembly (3) according to Claim 6, wherein the first structure (10) is fixed (S4) discontinuously onto the second structure (12) such that the securing element (18) comprises at least two adjacent segments extending in the extension of one another.

8. Method for manufacturing a subassembly according to Claim 7, wherein the first structure (10) is fixed (S4) onto the second structure (12) along spot or linear segments.

9. Method for manufacturing (S) a subassembly (3) according to one of Claims 1 to 8, wherein the first structure (10) is fixed (S4) onto the second structure (12) using at least one of the following techniques: gluing, welding, stitching.

10. Method for manufacturing (S) a subassembly (3) according to one of Claims 1 to 9, wherein the first structure (10) is securely fixed (S4) to the second structure (12) using at least two distinct securing elements (18).

11. Method for manufacturing (S) a subassembly (3) according to Claim 10, wherein the first structure (10) is fixed (S4) onto the second structure (12) along at least two securing elements (18) which extend substantially parallel to one another.

12. Method for manufacturing (S) a subassembly (3) according to one of Claims 1 to 11, wherein the cutting step (S5) comprises the following substeps:
- cutting the securing element (18) along a first cutting line so as to obtain the subassembly (3) without securing element (18), and
- cutting the securing element (18) along a second cutting line so as to separate it from the rest of the assembly (1) and form a second subassembly (3).

13. Method for manufacturing (S) a subassembly (3) according to Claim 12, wherein the substeps of cutting of the assembly (1) along the first cutting line and along the second cutting line are performed simultaneously.
